(19) **Europäisches Patentamt / European Patent Office / Office européen des brevets**

(11) **EP 4 092 378 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **22173615.0**

(22) Anmeldetag: **16.05.2022**

(51) Internationale Patentklassifikation (IPC):
**G01B 11/00** *(2006.01)* **A47J 31/44** *(2006.01)*
**G01B 11/25** *(2006.01)* **G01F 17/00** *(2006.01)*
**G01F 23/292** *(2006.01)*

(52) Gemeinsame Patentklassifikation (CPC):
**G01B 11/2513; A47J 31/4482; G01B 11/00;**
G01F 17/00

(54) **VORRICHTUNG, VERFAHREN UND GETRÄNKEAUTOMAT ZUR VOLUMENBESTIMMUNG EINES BEHÄLTERS**

DEVICE, METHOD AND BEVERAGE DISPENSER FOR DETERMINING THE VOLUME OF A CONTAINER

DISPOSITIF, PROCÉDÉ ET DISTRIBUTEUR DE BOISSONS POUR DÉTERMINER LE VOLUME D'UN RÉCIPIENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2021 DE 102021205046**

(43) Veröffentlichungstag der Anmeldung:
**23.11.2022 Patentblatt 2022/47**

(73) Patentinhaber: **WMF GmbH**
**73312 Geislingen/Steige (DE)**

(72) Erfinder:
• **Striggow, Johannes**
**70372 Stuttgart (DE)**
• **Weigl, Bernhard**
**89555 Steinheim (DE)**
• **Joos, Stephan**
**73312 Geislingen/Türkheim (DE)**

(74) Vertreter: **Pfenning, Meinig & Partner mbB**
**Patent- und Rechtsanwälte**
**Theresienhöhe 11a**
**80339 München (DE)**

(56) Entgegenhaltungen:
EP-B1- 1 009 969          DE-A1- 102014 217 840
DE-A1- 102018 113 933     US-A1- 2019 062 137

**Beschreibung**

Die vorliegende Erfindung betrifft eine Vorrichtung, ein Verfahren und einen Getränkeautomaten zum Bestimmen eines Volumens eines Behälters, insbesondere eines Getränkebehälters.

Getränkeautomaten füllen typischerweise Getränke in einer vorbestimmten Menge in Getränkebehälter wie Tassen, Becher oder Gläser ab. Bei derartigen Getränkeautomaten können oftmals nur Getränkebehälter mit einem Volumen verwendet werden, welches der vorbestimmten Ausgabemenge des Getränkeautomaten entspricht. Werden Getränkebehälter mit zu kleinen Volumen verwendet, kann dies zu einem Überströmen des Getränks führen. Wenn andererseits Getränkebehälter mit sehr großen Volumen verwendet, kann es vorkommen, dass der jeweilige Getränkebehälter nur zu einem geringen Teil mit dem Getränk gefüllt wird. Dies kann zur Unzufriedenheit führen, zum Beispiel bei Kunden.

Es gibt im Stand der Technik verschiedene Getränkeautomaten, die das Volumen des Getränkebehälters abschätzen, um die Ausgabemenge des Getränks auf das Volumen des Getränkebehälters abzustimmen. So offenbart die DE 10 2014 217 840 B4 einen Getränkeautomaten, der einen Füllstand des Getränkebehälters ermittelt. Bei Kenntnis der Abmessungen des Getränkebehälters, beispielsweise wenn der Getränkeautomat Getränkebehälter zur Verfügung stellt, lässt sich aus der Flüssigkeitshöhe das vom Getränkeautomaten auszugebene Volumen errechnen. Bei wechselnden oder unbekannten Getränkebehältern lässt sich das Getränkevolumen hier bestenfalls nur abschätzen.

Die Druckschrift US 2019/ 0 062 137 A1 beschreibt ein System zur Generierung eines dreidimensionalen Modells eines Getränkebehälters vor dem Befüllen mit einer Flüssigkeit. Anhand des dreidimensionalen Modells wird das Innenvolumen des Getränkebehälters bestimmt.

Die Druckschrift DE 10 2018 113 933 A1 offenbart ein Verfahren zur Bestimmung eines Parameters eines Getränkebehälters unter Verwendung eines Abstandssensors. In dem Verfahren wird der Abstand eines Punktes auf der Oberfläche des Getränkebehälters zu dem Abstandssensor in einer Messung ermittelt. Unter Verwendung mehrerer solcher Abstandsmessungen lassen sich Parameter des Getränkebehälters bestimmen.

Die Druckschrift DE 10 2014 017 490 A1 beschreibt eine Vorrichtung zur Erfassung einer Größe eines befüllbaren Behälters. Die Größe wird mittels mehrerer Reflexionslichtschranken bestimmt, die über und seitlich neben dem befüllbaren Behälter angeordnet sind.

In der gewerblichen Gastronomie wird vom zahlenden Kunden eine korrekt befüllte Tasse erwartet. Hierzu kann man entsprechend dem gewählten Produkt eine vorgegebene Menge ausgeben oder falls über eine Tassenerkennung mittels Gewichtssensoren oder optischen Sensoren möglich ist, eine Menge entsprechend der Tasse. Eine Mengenausgabe entsprechend der erkannten Tasse ist relativ einfach, da in der Gastronomie immer das gleiche Geschirr verwendet wird. In diesem Fall haben zum Beispiel eine Espressotasse und eine Cappuccinotasse immer ihr gleiches Volumen. Das gleiche gilt auch in den Bereichen der Gastronomie, wo der Kunde sein Getränk zum Mitnehmen ("to-go") bestellt und wo z.B. Becher in den vorbekannten Größen S-M - L verwendet werden.

Bei der Büroversorgung mit Kaffee oder anderen Heißgetränken verwendet in der Regel jeder oder viele der Benutzer ihre eigene Tasse mit unterschiedlichem Volumen. Hier stoßen die bekannten Systeme an ihre Grenzen oder könne dieses gar nicht behandeln bzw. damit umgehen. Außerdem werden in dem genannten "to-go"-Gewerbe aus Umweltschutzgründen sukzessive die Einwegbecher verboten. Bereits jetzt kommen daher immer mehr "bring your own cup" Systeme auf, bei denen die Kunden ihre eigenen Getränkebehälter mitbringen und vor Ort abfüllen lassen können, um die bereits bestehenden oder zukünftig geltenden gesetzlichen Auflagen zu erfüllen.

Durch die von Getränk zu Getränk wechselnden Getränkebehälter ist die korrekte Befüllung ohne Unterfüllung oder Überfüllung (Überlaufen des Gefäßes) nicht möglich. Auch bei Benutzung von bekannten Getränkebehältern kann es beispielsweise durch Verwendung eines falschen Tassentyps oder Positionierung zu einer Fehlbefüllung des Getränkebehälters kommen (Über-, Unterfüllung oder an der Tasse vorbei).

Es ist somit die Aufgabe der vorliegenden Erfindung, die vorgenannten Probleme zumindest teilweise zu lösen.

Diese Aufgabe wird zumindest teilweise durch die Gegenstände der unabhängigen Patentansprüche gelöst. Weiterbildungen werden in der nachfolgenden Beschreibung und in den abhängigen Ansprüchen beschrieben.

Dementsprechend wird eine Vorrichtung zum Bestimmen eines Volumens eines Behälters, insbesondere eines Getränkebehälters vorgeschlagen. Die Vorrichtung umfasst:

- eine horizontale Aufstellfläche zum Abstellen des Behälters,
- ein Projektionsvorrichtung, welche ausgestaltet ist, zwei Lichtlinien auf die Aufstellfläche und den darauf abgestellten Behälter zu projizieren,
- eine Bildaufnahmeeinheit, welche unter einem Winkel zur Projektionsvorrichtung auf die Aufstellfläche gerichtet ist, und ausgestaltet ist, den Behälter und die durch die Projektionsvorrichtung projizierten Lichtlinien zu erfassen, und
- eine Auswerteeinheit, welche ausgestaltet ist, anhand der aufgenommen Lichtlinien mindestens eine Innenkonturlinie des Behälters und eine Mittelpunktlinie des Behälters zu ermitteln, und anhand eines Rotationskörpers, der durch Rotation der Innenkonturlinie um die Mittelpunktlinie entsteht, das Volumen des Behälters zu bestimmen.

Mit der Vorrichtung kann also das Volumen des Behälters bestimmt werden. Hierbei erfordert die Vorrichtung keine vorherigen Kenntnisse über die Abmessungen des Behälters, um das Volumen des Behälters zu bestimmen. Daher eignet sich die Vorrichtung beispielsweise für Anwendungen, in denen das Volumen des Behälters häufig wechselt oder unbekannt ist. Die Bestimmung des Innenvolumens kann dabei lediglich auf Basis einer Innenkonturlinie erfolgen, wobei in vorteilhafter Weise nur zwei Lichtlinien verwendet werden müssen. Es ist beispielsweise nicht erforderlich ein komplettes 3D Modell des Behälters zu erfassen. Nachstehend ist unter dem verwendeten Begriff "Volumen" ein "Innenvolumen" bzw. "Füllmenge" des Behälters zu verstehen.

Es kann ein kartesisches Koordinatensystem mit x-, y-, und z-Koordinaten definiert werden. Hierbei ist die z-Koordinate typischerweise parallel zur Schwerkraft. Die horizontale Aufstellfläche ist in der Regel parallel zur einer xy-Ebene.

In einer Ausführungsform sind die Lichtlinien winklig zueinander ausgerichtet. Die Lichtlinien können zum Beispiel in einem Winkel von mindestens 15°, zum Beispiel mindestens 45°, insbesondere mindestens 75° und/oder höchstens 175°, zum Beispiel höchstens 135°, insbesondere höchstens 105° zueinander ausgerichtet sein, beispielsweise etwa 90°. Es kann optional vorgesehen sein, dass die Lichtlinien einander kreuzen. Ein Kreuzungspunkt der Lichtlinien kann hierbei zur Kalibrierung der Vorrichtung, insbesondere der Bildaufnahmeeinheit, verwendet werden (vgl. Figurenbeschreibung). Der Kreuzungspunkt der Lichtlinien kann auch als Positionierungshilfe für eine korrekte Platzierung des Behälters auf der Aufstellfläche verwendet werden (vgl. unten). Der genannte Kreuzungspunkt ist jedoch optional, und kann selbst bei winklig zueinander angeordneten Lichtlinien in manchen Ausführungsformen weggelassen werden. Alternativ können die Lichtlinien parallel zueinander ausgerichtet sein. Jede Lichtlinie kann als durchgehende Linie, die keine Unterbrechungen aufweist, ausgestaltet sein. Unabhängig davon können die Lichtlinien weniger als 5 mm, bevorzugt weniger als 2 mm, besonders bevorzugt weniger als 1 mm breit sein. Die Länge der Lichtlinie ist vorzugsweise länger als 5 cm, besonders bevorzugt länger als 10 cm und/oder bevorzugt kürzer als 40 cm, besonders bevorzugt kürzer als 20 cm.

Die Auswerteeinheit kann ausgestaltet sein

- auf einem oberen Behälterrand erzeugte Lichtpunkte der Lichtlinien zu ermitteln, und
- die Mittelpunktlinie des Behälters anhand der Lichtpunkte bestimmen.

Da der Behälterrand typischerweise eine relativ schmale, endliche Breite hat, kann der dort projizierte Teil der jeweiligen Lichtlinie näherungsweise als Lichtpunkt betrachtet werden. Die Projektionsvorrichtung kann derart ausgestaltet sein, dass zumindest eine der beiden Lichtlinien zwei Lichtpunkte auf gegenüberliegenden Seiten des Behälterrandes erzeugt und/oder dass jede projizierte Lichtlinie auf dem Behälterrand mindestens einen Lichtpunkt erzeugt und/oder dass jede projizierte Lichtlinie auf dem Behälterrand zwei Lichtpunkte auf gegenüberliegenden Seiten des Behälterrandes erzeugt.

Die Auswerteeinheit kann weiter ausgestaltet sein

- drei auf dem oberen Behälterrand erzeugte Lichtpunkte zu bestimmen, welche ein Dreieck bilden, und
- über einen Umkreis des Dreiecks die Mittelpunktlinie des Behälters zu bestimmen.

Die auf dem oberen Behälterrand erzeugten Lichtpunkte können also die Eckpunkte eines imaginären Dreiecks bilden. Der Umkreis des Dreiecks fällt dabei zumindest näherungsweise mit dem Behälterrand zusammen. Ein Mittelpunkt des Umkreises kann also benutzt werden, um den Mittelpunkt des Behälterrandes zu bestimmen. Der umlaufende Behälterrand bildet im Regelfall die höchste Erhebung der Behältergeometrie. Eine Linie, welche den Mittelpunkt des Behälterrandes schneidet und senkrecht zu einer Bodenfläche des Behälters ausgerichtet ist, kann dann die Mittelpunktlinie bilden. Mit anderen Worten kann der Mittelpunkt des Behälterrandes in Höhenrichtung als Linie erweitert werden, um die Mittelpunktlinie zu bilden.

Alternativ kann auch der Kreuzungspunkt der Lichtlinien verwendet werden, um als Ausgangspunkt für die Mittelpunktlinie des Behälters zu dienen. Dies setzt eine Platzierung des Behälters auf der Aufstellfläche durch den Benutzer voraus, bei der ein Mittelpunkt der Bodenfläche des Behälters mit dem Kreuzungspunkt zusammenfällt. Der Mittelpunkt der Bodenfläche bzw. der Kreuzungspunkt kann dann senkrecht zur Bodenfläche in Höhenrichtung als Linie erweitert werden, um die Mittelpunktlinie zu bilden. Als Positionierungshilfe kann mittig auf der Bodenfläche des Behälters eine Markierung vorgesehen sein, zum Beispiel in Form eines Punkts oder Fadenkreuzes. Alternativ oder zusätzlich können als Positionierungshilfe auch eine oder mehrere Markierungen auf der Aufstellfläche vorgesehen sein.

Der Winkel der Bildaufnahmeeinheit zur Projektionsvorrichtung, bzw. der Winkel der optischen Achse der Bildaufnahmeeinheit zur optischen Achse der Projektionsvorrichtung, kann prinzipiell größer als 0° und/oder kleiner als 90° sein. Beispielsweise kann der genannte Winkel mindestens 2°, insbesondere mindestens 5° und/oder höchstens 45°, beispielsweise höchstens 30°, vorzugsweise höchstens 10° sein. In manchen Ausführungsformen sind die optische Achse der Bildaufnahmeeinheit und die optische Achse der Projektionsvorrichtung parallel versetzt, beispielsweise in y-Richtung. Oftmals sind die beiden genannten optischen Achsen parallel zu einer gleichen Ebene ausgerichtet. Die optische Achse der Bildaufnahmeeinheit kann zum Beispiel parallel zu einer xz-Ebene ausgerichtet sein. Weiter kann die optische Achse der Projektionsvorrichtung parallel zur xz-Ebene ausgerichtet sein. Beispielsweise ist der parallele Versatz der genannten optischen Achsen gleich 0 mm oder mindestens 0 mm, insbesondere mindestens 5 und/oder höchstens 300, insbesondere höchstens 50 mm sein.

In manchen Ausführungsformen haben die Lichtlinien eine Wellenlänge und/oder einen Wellenlängenbereich im sichtbaren Spektrum, wobei das sichtbare Spektrum Wellenlängen zwischen 400 nm und 700 nm umfasst. Die Wellenlänge bzw. der Wellenlängenbereich kann zum Beispiel mindestens 600 nm und/oder höchstens 700 nm sein.

Die durch die Projektionsvorrichtung ausgestrahlten Lichtlinien sind üblicherweise Lichtlinien mit einem geraden Verlauf. Bedingt durch die oftmals gekrümmte Form des Behälters können die auf dem Behälter projizierten Linien gerade und/oder gekrümmte Abschnitte aufweisen. Als Projektionsvorrichtung können grundsätzlich alle Projektoren zum Einsatz kommen, die für die Bildaufnahmeeinheit erkennbare Lichtlinien projizieren können. Aufgrund der Linienform des Lichts bietet sich insbesondere mindestens ein Laser an, vorzugsweise mindestens ein Linienlaser, insbesondere ein Kreuzlasermodul. Laser verfügen in der Regel über eine große Genauigkeit und können ein kontrastreiches Bild liefern, sodass die projizierten Lichtlinien zuverlässig und genau erkannt werden können. Außerdem lassen sich Laser aufgrund ihrer heute möglichen geringen Abmessungen problemlos im Bereich des Getränkeauslasses an dem Getränkeautomaten unterbringen. Somit kann die Projektionsvorrichtung mindestens einen Linienlaser und/oder ein Kreuzlasermodul umfassen, welcher oder welches ausgestaltet ist, die Lichtlinien zu erzeugen. Andere geeignete Streifenlichtquellen kommen ebenfalls in Betracht und umfassen zum Beispiel LEDs oder Leuchten.

Nach einer weiteren Ausgestaltung kann eine Kamera wie eine CCD-Kamera als Bildaufnahmeeinheit vorgesehen sein. Sie ermöglicht eine hochgenaue Erfassung der Lichtlinien. Derartige Kameras lassen sich so weit miniaturisieren, dass sie trotz ihrer geringen Abmessungen ein ausreichend aufgelöstes Bild aufnehmen.

Die Auswerteeinheit kann weiter ausgestaltet sein, anhand der aufgenommen Lichtlinien zwei Innenkonturlinien des Behälters zu ermitteln, und für jede Innenkonturlinie einen Rotationskörper zu bestimmen, wobei das Volumen des Behälters durch Mittelung der beiden Rotationskörper bestimmt wird. Vorteilhaft werden für die Bestimmung des Innenvolumens also höchstens oder lediglich zwei Innenkonturlinien ermittelt. Zur Bestimmung des Innenvolumens ist also nicht die Erfassung eines dreidimensionalen Modells des Behälters nötig. Hierdurch kann die Genauigkeit der Volumenbestimmung erhöht werden und/oder die Komplexität des Verfahrens und/oder der Vorrichtung zur Volumenbestimmung kann reduziert werden.

Eine oder mehrere Innenkonturlinien des Behälters können von der Auswerteeinheit aus höchstens drei oder bevorzugt höchstens zwei von der Kamera aufgenommenen Bildern ermittelt werden.

Es ist beispielsweise vorstellbar, erst ein Bild zum Untergrundabgleich ohne Lichtlinien aufzunehmen. Ein solches Bild kann unabhängig davon erfasst werden, ob sich der Behälter bereits in der Vorrichtung befindet oder nicht. Anschließend kann eine erste Lichtlinie auf den Behälter projiziert werden und ein zweites Bild aufgenommen werden. Darauffolgend könnte die zweite Lichtlinie auf den Behälter projiziert werden und ein drittes Bild aufgenommen werden. Basierend auf diesen drei Bildern können anschließend die Innenkonturlinien bestimmt werden. Weiter ist vorstellbar ein erstes Bild ohne projizierte Lichtlinien zum Untergrundabgleich, Kontrastvergleich bzw. Helligkeitsabgleich zu erfassen und in einem zweiten Bild beide projizierte Lichtlinien gleichzeitig zu erfassen.

Es ist ebenso denkbar die beiden projizierten Lichtlinien in einem ersten Bild, ohne dass sich ein Behälter in der Vorrichtung befindet, gleichzeitig zu erfassen. Darauffolgend kann der Behälter in der Vorrichtung platziert werden und die auf den Behälter projizierten Lichtlinien in einem zweiten Bild erfasst werden. Vorteilhafterweise können beide Innenkonturlinien auch durch ein einziges von der Kamera aufgenommenes Bild der auf den Behälter projizierten Lichtlinien bestimmt werden.

In einer Ausführungsform ist die Auswerteeinheit ausgestaltet, anhand des bestimmten Volumens des Behälters eine Ausgabemenge und/oder eine Zubereitungsrezeptur eines in den Behälter zu füllenden Getränks zu bestimmen. Zum Beispiel kann das Ergebnis der Volumenbestimmung Einfluss auf eine Menge eines beizumengenden Getränkeinhaltstoffs nehmen. Somit können Behälter unabhängig von ihrer Größe automatisch richtig dosiert werden. Ein Überlaufen lässt sich folglich verhindern. Wenn die Menge des Getränkeinhaltstoffes, z.B. eine zum Brühen von Kaffee verwendete Bohnenmenge oder des gemahlenen Kaffees, auf das Volumen des Behälters abgestimmt wird, kann dies zu einer Kostenersparnis und einer Qualitätsverbesserung des Getränks, z.B. des Kaffees, beitragen.

Die Vorrichtung kann benutzt werden, das Volumen eines leeren Behälters oder ein Restvolumen eines zumindest teilweise mit Flüssigkeit gefüllten Behälters zu bestimmen. Das Restvolumen bezeichnet hier die Volumendifferenz zwischen einem leeren Behälter und dem zumindest teilweise mit Flüssigkeit gefüllten Behälters. Hierdurch kann eine im Behälter vorhandene oder in den Behälter ausgegebene Flüssigkeitsmenge überwacht werden.

Die in dieser Schrift genannte Bestimmung des Volumens des Behälters kann sich somit auf die Bestimmung des Volumens eines leeren Behälters oder auf die Bestimmung des Restvolumens eines zumindest teilweise mit Flüssigkeit gefüllten Behälters beziehen.

Mit der Bestimmung des Restvolumens kann zum Beispiel die Flüssigkeitsmenge in dem Behälter während einer Getränkeausgabe, Reinigung, Wartung und/oder Entkalkung bestimmt und/oder überwacht werden. Falls das Restvolumen einen bestimmten Wert unterschreitet, kann die Vorrichtung ausgestaltet sein, einen Warnhinweis auszugeben.

Die Auswerteeinheit kann somit ausgestaltet sein, das Restvolumen eines zumindest teilweise mit Flüssigkeit gefüllten Behälters zu bestimmen. In diesem Fall projiziert die Projektionsvorrichtung die Lichtlinien auf die Aufstellfläche und den darauf abgestellten Behälter, der zumindest teilweise mit der Flüssigkeit gefüllt ist. Die Bildaufnahmeeinheit erfasst dann den zumindest teilweise mit Flüssigkeit gefüllten Behälter und die durch die Projektionsvorrichtung projizierten Lichtlinien.

Durch eine Volumenmessung des leeren Behälters und anschließend eine Volumenmessung des zumindest teilweise mit Flüssigkeit gefüllten Behälters kann die Auswerteeinheit außerdem ausgestaltet sein, die momentan in dem Behälter vorhandene Flüssigkeitsmenge durch Vergleich der beiden Volumenmessungen zu bestimmen. Die Volumenmessung kann vor, nach und/oder während der Befüllung des Behälters mit Flüssigkeit erfolgen.

Die Auswerteeinheit kann außerdem ausgestaltet sein, die Flüssigkeitsmenge in dem zumindest teilweise mit Flüssigkeit gefüllten Behälter mit einer Ausgabemenge zu vergleichen. Die Ausgabemenge kann zum Beispiel der Flüssigkeitsmenge entsprechen, die von einer Getränkezubereitungseinheit und/oder einer Reinigungseinheit bereitgestellt und ausgegeben wird. Falls die Flüssigkeitsmenge in dem Behälter um einen vorbestimmten Faktor oder eine vorbestimmte Menge von der Ausgabemenge abweicht, kann die Auswerteeinheit ausgestaltet sein, einen Warnhinweis auszugeben. Es kann beispielsweise vorkommen, dass es Verstopfungen, Undichtigkeiten oder Flüssigkeitsleckagen gibt, wodurch die in den Behälter angekommene Flüssigkeitsmenge von der durch die Getränkezubereitungseinheit und/oder die Reinigungseinheit bereitgestellten Ausgabemenge abweicht.

Außerdem kann die gemessene Flüssigkeitsmenge in dem Behälter für eine Kalibrierung eines Volumenflusses benutzt werden. So kann die Zeit gemessen werden, z.B. mittels einer Zeitmesseinheit, die benötigt wird, um den Behälter mit der Flüssigkeitsmenge zu füllen. Bei Kenntnis der Zeit und der Flüssigkeitsmenge kann die Auswerteeinheit nun den Volumenfluss in Flüssigkeitsmenge / Zeit berechnen bzw. kalibrieren.

Weiter kann eine Dosierung der Flüssigkeit überwacht werden. Werden zum Beispiel mindestens zwei verschiedenartige Flüssigkeiten in verschiedenen Teilmengen nacheinander in den Behälter gefüllt, können die einzelnen Teilmengen der verschiedenen Flüssigkeiten durch die Auswerteeinheit überwacht werden, indem nach jedem Teilbefüllen mit einer Flüssigkeit das jeweilige Restvolumen des Behälters bzw. die Teilmenge der Flüssigkeit in dem Behälter gemessen wird. So kann bei der Zubereitung von Latte Macchiato oder Cappuccino die Teilmengen von Kaffee, Milch und Milchschaum jeweils überwacht werden. Somit können Dosierschwankungen verringert bzw. vermieden werden.

Die Bestimmung des Restvolumens des zumindest teilweise mit Flüssigkeit gefüllten Behälters kann besonders gut gelingen, wenn die Flüssigkeit das durch die Projektionsvorrichtung projizierte Licht hinreichend reflektiert und/oder hinreichend undurchlässig für dieses Licht ist. Die Angabe "hinreichend" kann hier bedeuten, dass ein bestimmter Schwellenwert überschritten werden soll. Beispielhafte Flüssigkeiten wären Kaffee, Milch, Reinigungsflüssigkeit, Spülwasser, Flüssigkeit mit einer Schaumschicht wie Espresso, Cappuccino oder Spülwasser, und/oder Mischungen dieser genannten Flüssigkeiten. Da die Lichtlinien auf die Flüssigkeit treffen und dort reflektiert werden, wird in diesem Fall das Restvolumen des Behälters gemessen, welches noch mit Flüssigkeit befüllt werden kann.

Weiter kann die Auswerteeinheit ausgestaltet sein, das von der Auswerteeinheit bestimmte Volumen des Behälters mit Volumen von vorbekannten Behältern zu vergleichen. Falls das gemessene Volumen von sämtlichen Volumen der vorbekannten Behälter abweicht, kann zum Beispiel ein falsch positionierter Behälter oder die Verwendung eines falschen Behältertyps erkannt werden. In diesem Fall kann ein entsprechender Warnhinweis ausgegeben werden oder die Ausgabemenge der Flüssigkeit angepasst werden.

Die Vorrichtung kann außerdem eine Steuereinheit umfassen. Die Steuereinheit kann zum Kommunizieren und Ansteuern mit der Projektionsvorrichtung, der Bildaufnahmeeinheit und/oder der Auswerteeinheit verbunden sein. Die Steuereinheit kann außerdem mit einer Getränkezubereitungseinheit und/oder einer Reinigungseinheit verbunden sein, um diese anzusteuern und/oder mit diesen zu kommunizieren. Die Kommunikation zwischen den verschiedenen Einheiten kann zum Beispiel über Signalleitungen oder drahtlos, wie über Bluetooth oder WLAN, ausgestaltet sein. Die Ergebnisse der Auswerteeinheit können von der Steuereinheit benutzt werden, um die Projektionsvorrichtung, die Bildaufnahmeeinheit, die Getränkezubereitungseinheit und/oder die Reinigungseinheit anzusteuern. So kann die Steuereinheit ausgebildet sein, eine Getränkemenge und/oder eine Getränkerezeptur in Abhängigkeit von dem bestimmten Volumen des Behälters und/oder dem bestimmten Restvolumen des zumindest teilweise mit Flüssigkeit gefüllten Behälters zu steuern.

Prinzipiell können verschiedenste Behälterformen, z.B. zylindrisch oder konisch, vermessen werden. In der Regel wird das Volumen unter der Annahme, dass der Behälter rotationssymmetrisch um seine Mittelpunktachse bzw. Mittelpunktlinie ist, bestimmt. Ein Durchmesser des Behälters gemessen von einer Grundfläche zum Behälterrand hin kann in der Regel zumindest abschnittsweise gleich bleiben und/oder zunehmen. Der Behälter kann insbesondere im Bereich des oberen Behälterrandes den größten Durchmesser haben. Weiter kann sich der Behälterrand im Wesentlichen horizontal ersttrecken und/oder eben sein, wobei der Behälterrand insbesondere den höchsten Punkt des Behälters bildet.

Das Material des Behälters sollte ausgestaltet sein, das Licht hinreichend zu reflektieren, damit die Lichtlinien zuverlässig detektiert werden können. Der Anteil des Lichts, der durch den Behälter reflektiert wird, sollte größer sein, als der Anteil des Lichts, der durch den Behälter absorbiert wird, und/oder der Anteil des Lichts, der durch den Behälter durchgelassen wird. Hierbei kommen sowohl diffuse Reflektion als auch gerichtete Reflektion in Betracht. Es ist weiter vorteilhaft, wenn der Anteil der diffusen Reflektion den Anteil der gerichteten Reflektion übersteigt, z.B. mindestens um das Zweifache. Geeignete Materialien für den Behälter sind zum Beispiel zumindest überwiegend lichtundurchlässige und/oder matte Materialien wie Keramik, Pappe, Holz, Kunststoff und/oder Metall, vorzugsweise Metall mit einer matten Oberfläche. Es kann auch vorgesehen sein, dass der Behälter eine für Licht undurchlässige Beschichtung und/oder eine diffus reflektierende matte Beschichtung und/oder eine entsprechende Oberflächenbehandlung, welche lichtundurchlässig oder diffus reflektierend ausgebildet ist, aufweist, z.B. aus einem der vorstehenden Materialien.

Der Behälter ist insbesondere zum Abfüllen von Flüssigkeiten ausgestaltet. In manchen Ausführungsformen kann der Behälter ein Getränkebehälter wie eine Tasse, ein Becher, Einwegbecher, Mehrwegbecher sein. Bei entsprechender Beschichtung oder Oberflächenbehandlung (s. oben) kann der Getränkebehälter auch als Glas ausgestaltet sein. Der Behälter kann auch ein Reinigungsbehälter, Wartungsbehälter oder Entkalkungsbehälter sein. Dies kann hilfreich sein, falls ein mit der zuvor beschriebenen Vorrichtung ausgestatteter Getränkeautomat gereinigt, gewartet und/oder entkalkt werden soll.

Die horizontale Aufstellfläche kann ausgestaltet sein, das projizierte Licht zu absorbieren und/oder zu diffus zu reflektieren. Hierzu kann die Aufstellfläche aus absorbierenden oder diffus reflektierenden Materialen gebildet sein oder eine entsprechende Beschichtung aufweisen. Hierdurch kann der Kontrast der aufgenommenen Bilder erhöht werden.

Außerdem wird mit der vorliegenden Erfindung ein Verfahren zum Bestimmen eines Volumens eines Behälters, insbesondere eines Getränkebehälters, bereitgestellt. Das Verfahren umfasst zumindest die folgenden Schritte:

- Projizieren von zwei Lichtlinien auf eine horizontale Aufstellfläche und den darauf abgestellten Behälter;
- Aufnehmen eines Bildes des Behälters mit den darauf projizierten Lichtlinien und/oder Aufnehmen von höchstens drei Bildern des Behälters, in denen die auf den Behälter projizierten Lichtlinien erfasst werden;
- Ermitteln einer Innenkonturlinie des Behälters und einer Mittelpunktlinie des Behälters anhand der Positionen der Lichtlinien auf dem Behälter; und
- Bestimmen des Volumens des Behälters anhand eines Rotationskörpers, der durch Rotation der Innenkonturlinie um die Mittelpunktlinie entsteht.

Das Verfahren kann zusätzlich folgende Schritte aufweisen:

- Ermitteln von auf einem oberen Behälterrand projizierten Lichtpunkten; und
- Bestimmen der Mittelpunktlinie des Behälters anhand der Lichtpunkte.

Die Lichtlinien können durch Kontrastvergleich aus dem Bild extrahiert werden. Außerdem kann zusätzlich ein weiteres Bild des Behälters ohne die Lichtlinien aufgenommen werden. Mithilfe des weiteren Bildes kann eine Umgebungshelligkeit bestimmt werden, welche für einen Kontrastvergleich bzw. Helligkeitsabgleich verwendet werden kann.

Eine oder mehrere Innenkonturlinien des Behälters können von der Auswerteeinheit aus höchstens drei oder bevorzugt höchstens zwei von der Kamera aufgenommenen Bildern ermittelt werden.

Es ist beispielsweise vorstellbar, erst ein Bild zum Untergrundabgleich ohne Lichtlinien aufzunehmen. Ein solches Bild kann unabhängig davon erfasst werden, ob sich der Behälter bereits in der Vorrichtung befindet oder nicht.

Anschließend kann eine erste Lichtlinie auf den Behälter projiziert werden und ein zweites Bild aufgenommen werden. Darauffolgend könnte die zweite Lichtlinie auf den Behälter projiziert werden und ein drittes Bild aufgenommen werden. Basierend auf diesen drei Bildern können anschließend die Innenkonturlinien bestimmt werden. Weiter ist vorstellbar ein erstes Bild ohne projizierte Lichtlinien zum Untergrundabgleich, Kontrastvergleich bzw. Helligkeitsabgleich zu erfassen und in einem zweiten Bild beide projizierte Lichtlinien gleichzeitig zu erfassen.

Es ist ebenso denkbar die beiden projizierten Lichtlinien in einem ersten Bild, ohne dass sich ein Behälter in der Vorrichtung befindet, gleichzeitig zu erfassen. Darauffolgend kann der Behälter in der Vorrichtung platziert werden und die auf den Behälter projizierten Lichtlinien in einem zweiten Bild erfasst werden. Vorteilhafterweise können beide Innenkonturlinien auch durch ein einziges von der Kamera aufgenommenes Bild der auf den Behälter projizierten Lichtlinien bestimmt werden.

Das Verfahren kann insbesondere mit der oben beschriebenen Vorrichtung durchgeführt werden.

Außerdem wird ein Getränkeautomat zum Bestimmen eines Volumens eines Behälters bereitgestellt. Der Getränkeautomat ist insbesondere dazu ausgestaltet, das vorgenannte Verfahren durchzuführen. Weiter kann der Getränkeautomat die vorstehende Vorrichtung zum Bestimmen eines Volumens eines Behälters aufweisen.

Üblicherweise umfasst der Getränkeautomat einen Getränkeauslass zur Abgabe eines Getränks. Die Abgabe des Getränks erfolgt dabei in Schwerkraftrichtung entlang einer z-Achse eines kartesischen Koordinatensystems. Die Projektionsvorrichtung kann zwischen dem Getränkeauslass und der Bildaufnahmeeinheit angeordnet sein, beispielsweise in einer horizontalen Richtung senkrecht zur z-Achse zwischen dem Getränkeauslass und der Bildaufnahmeeinheit. Der Getränkeautomat kann die Getränkezubereitungseinheit und/oder die Reinigungseinheit aufweisen, welche zuvor beschrieben wurden.

Merkmale, die nur im Zusammenhang mit der Vorrichtung oder dem Getränkeautomaten beschrieben wurden, können auch mit dem Verfahren beansprucht werden und andersherum. Ebenfalls können Merkmale, die lediglich im Zusammenhang mit der Vorrichtung beschrieben wurden, mit dem Getränkeautomaten beansprucht werden und andersherum.

Mit der Vorrichtung, dem Verfahren sowie dem Getränkeautomaten der vorgeschlagenen Art kann also eine Volumenbestimmung eines Behälters ermöglicht und/oder verbessert werden.

Ausführungsbeispiele der vorliegenden Erfindung werden anhand beigefügter Figuren erläutert. Es zeigen:

Fig. 1 eine schematische Darstellung eines Getränkeautomaten zum Bestimmen eines Volumens eines Behälters in einer Seitenansicht;

Fig. 2 eine schematische Darstellung des Getränkeautomaten der Fig. 1 in einer Vorderansicht;

Fig. 3 eine schematische Darstellung eines auf einer Aufstellfläche abgestellten Behälters in einer perspektivischen Ansicht;

Fig. 4 eine schematische Darstellung eines auf einer Aufstellfläche abgestellten Behälters in einer Draufsicht;

Fig. 5 eine schematische Darstellung des Behälters der Fig. 4 in einer perspektivischen Ansicht; und

Fig. 6 ein Modell eines Querschnitts eines Behälters, welches zur Volumenbestimmung des Behälters verwendet werden kann.

Hier und im Folgenden sind in verschiedenen Figuren wiederkehrende Merkmale jeweils mit denselben oder ähnlichen Bezugszeichen bezeichnet.

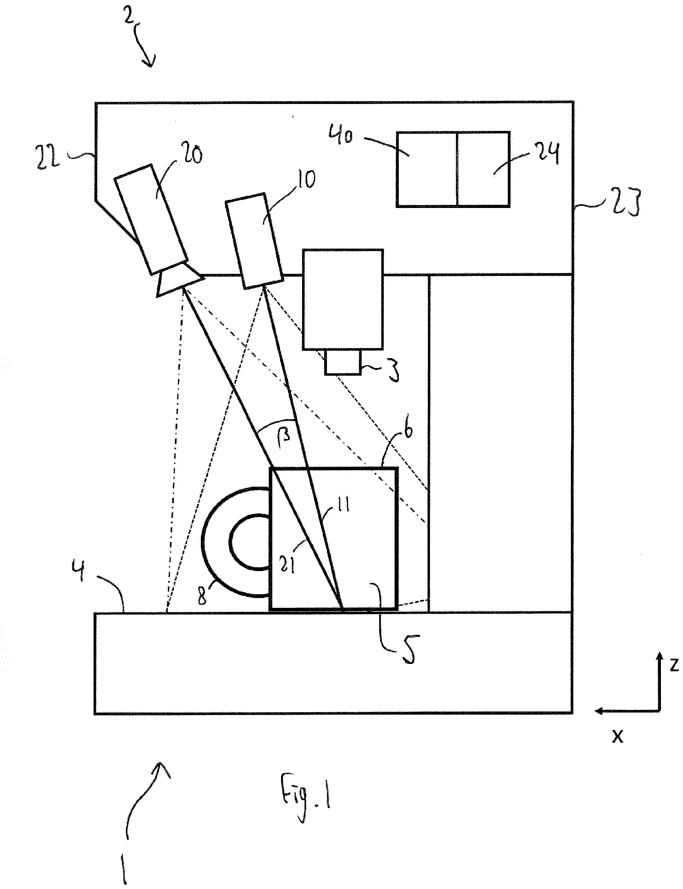

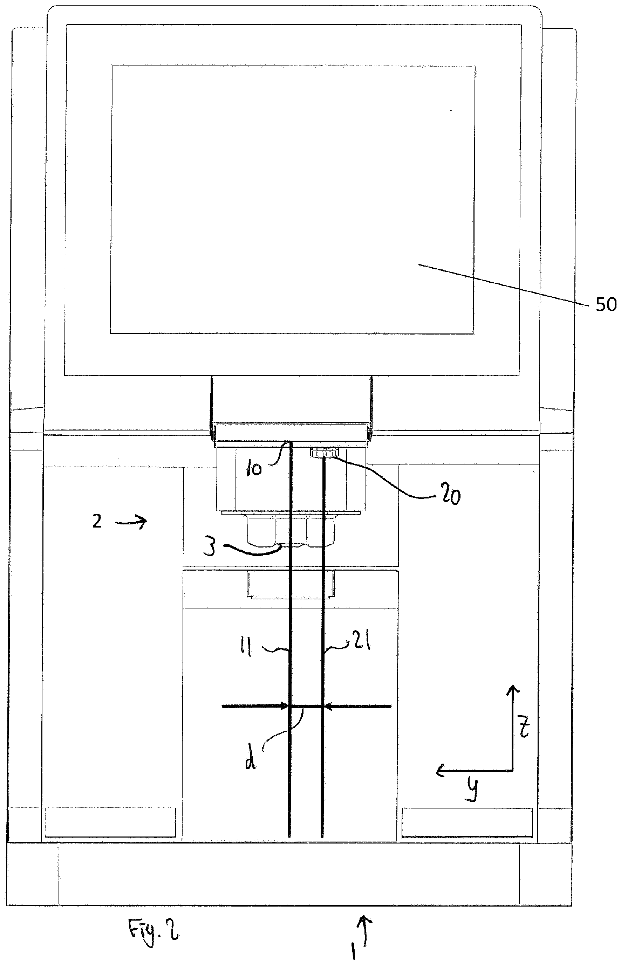

Die Fig. 1 zeigt schematisch eine Darstellung eines Getränkeautomaten 1 in einer Seitenansicht. Die Fig. 2 zeigt schematisch eine Darstellung des Getränkeautomaten 1 in einer Vorderansicht. Der Getränkeautomat 1 kann zum Beispiel zum Ausgeben von Heißgetränken konfiguriert sein und als solcher beispielsweise ein Kaffeevollautomat oder eine Kaffeemaschine sein. Der gezeigte Getränkeautomat 1 kann alternativ oder zusätzlich zum Ausgeben von Kaltgetränken oder lauwarmen Getränken ausgestaltet sein.

Der Getränkeautomat 1 weist einen Getränkeauslass 3 auf, welcher typischerweise fluidisch mit einer Pumpe und einem Fluidreservoir verbunden ist. Üblicherweise ist der Getränkeauslass 3 zwischen einer Vorderseite 22 und einer Rückseite 23 des Getränkeautomaten angeordnet. Im Betrieb des Getränkeautomaten 1 gibt der Getränkeauslass 3 ein Getränk vertikal in Schwerkraftrichtung und somit entlang einer z-Achse eines kartesischen Koordinatensystems in einen Getränkebehälter 5 ab. Die Pumpe und das Fluidreservoir können Bestandteil einer Getränkezubereitungseinheit 40 sein. Es kann eine mit der Getränkezubereitungseinheit 40 verbundene und als Eingabeeinheit ausgestaltete Bedienoberfläche 50 vorgesehen sein, über die ein Benutzer sein gewünschtes Getränk und/oder seine gewünschte Zubereitungsrezeptur auswählen und eingeben kann.

Der Getränkeautomat 1 weist eine Vorrichtung 2 auf, welche zum Bestimmen eines Volumens des Getränkebehälters 5 ausgestaltet ist. Eine horizontale Aufstellfläche 4 zum Abstellen des Getränkebehälters 5 ist vorgesehen, welche sich parallel zu einer xy-Ebene erstreckt. Die Aufstellfläche 4 kann in manchen Ausführungsformen als Abtropfgitter ausgestaltet sein.

Die Vorrichtung 2 weist weiter eine Projektionsvorrichtung 10, eine Bildaufnahmeeinheit 20 und eine Auswerteeinheit 24 auf.

Die Projektionsvorrichtung 10 ist ausgestaltet, zwei gerade Lichtlinien 12, 13 zu erzeugen und auf die Aufstellfläche 4 und den darauf abgestellten Getränkebehälter 5 zu projizieren. Hierzu weist die Projektionsvorrichtung in der Regel ein Kreuzlasermodul auf, welches die Lichtlinien 12, 13 erzeugt. Es können auch zwei separate Linienlaser vorgesehen sein, um die Lichtlinien 12, 13 zu erzeugen. Linienlaser fächern typischerweise Laserstrahlen auf, um die Lichtlinien 12, 13 zu erzeugen, wobei das Auffächern des Laserstrahls in einem Linienlaser sich beispielsweise mit Brechung und/oder Beugung erreichen lässt. Für die Brechung kann zum Beispiel eine Linse wie eine Zylinderlinse verwendet werden. Die Beugung erfolgt üblicherweise an einem optischen Gitter. Alternativ kann auch eine andere Streifenlichtquelle beispielsweise in Form einer LED oder Leuchte vorgesehen sein, welche ausgestaltet ist, die Lichtlinien 12, 13 über eine geeignete Optik zu erzeugen.

Die Projektionsvorrichtung 10 erzeugt in der Regel sichtbares Licht mit einer Wellenlänge zwischen 400 nm und 700 nm, insbesondere zwischen 600 nm und 700 nm. Hierdurch kann ein Benutzer einfach erkennen, ob die Projektionsvorrichtung 10 funktioniert oder momentan arbeitet. Es können aber auch für den Benutzer nicht-sichtbare Teile des elektromagnetischen Spektrums verwendet werden, z.B. im IR-Bereich des elektromagnetischen Spektrums. In diesem Fall kann der Erfassungsvorgang vom Benutzer unbemerkt erfolgen, was zum Beispiel eine Manipulation des Benutzers während des Erfassens erschwert.

Die durch die Projektionsvorrichtung 10 erzeugten Lichtlinien 12, 13 sind in der Regel winklig zueinander ausgerichtet. Beispielsweise sind die Lichtlinien 12, 13 in einem Winkel $\alpha$ von mindestens 45° und/oder höchstens 135° zueinander ausgerichtet sind. Im gezeigten Ausführungsbeispiel beträgt der Winkel $\alpha$ etwa 90°. Außerdem können die Lichtlinien 12, 13 einander in einen Kreuzungspunkt 14 kreuzen. Der Kreuzungspunkt 14 der Lichtlinien 12, 13 kann hierbei für die Kalibrierung von einzelnen Teilen der Vorrichtung 2 oder als Positionierungshilfe für einen Benutzer verwendet werden.

In alternativen Ausführungsformen können die Lichtlinien 11, 12 parallel zueinander ausgerichtet sein und/oder keinen Kreuzungspunkt 14 aufweisen.

Die Bildaufnahmeeinheit 20 ist im gezeigten Ausführungsbeispiel unter einem Winkel $\beta$ zur Projektionsvorrichtung 10 auf die Aufstellfläche 4 gerichtet. Genauer gesagt sind eine optische Achse 11 der Projektionsvorrichtung 10 und eine optische Achse 21 der Bildaufnahmeeinheit 20 in einem Winkel $\beta$ zueinander ausgerichtet.

Der Winkel $\beta$ der optischen Achse 21 Bildaufnahmeeinheit 10 zur optischen Achse 11 der Projektionsvorrichtung 10 kann prinzipiell größer als 0° und/oder kleiner als 90° sein. Hierbei kann ein größerer Winkel $\beta$ einen größeren Versatz der Lichtlinien 12, 13 auf dem Behälter 5 in dem aufgenommenen Bild und eine bessere Tiefenauflösung bedeuten. Allerdings bildet der Getränkebehälter 5 selbst oftmals eine Limitierung für den genannten Winkel $\beta$, da die Messung darauf angewiesen ist, dass die auf dem Getränkebehälter 5 projizierten Lichtlinien 12, 13 vollständig auf dem aufgenommenen Bild sichtbar sind. Eine Seitenwand des Getränkebehälters 5 oder ein Getränkebehälterrand 6 können nämlich eine freie Sicht der Bildaufnahmeeinheit 20 beeinträchtigen. Aus der Geometrie eines beispielhaften Getränkebehälters 5 mit einer relativ hohen Seitenwand lässt sich ein maximaler Winkel $\beta$ berechnen, der gerade noch zu brauchbaren Messergebnissen führt. Dementsprechend kann der Winkel $\beta$ der Bildaufnahmeeinheit 20 zur Projektionsvorrichtung 10 mindestens 2°, insbesondere mindestens 5° und/oder höchstens 30°, vorzugsweise höchstens 10° betragen. Im gezeigten Ausführungsbeispiel ist der Winkel $\beta$ etwa 8°.

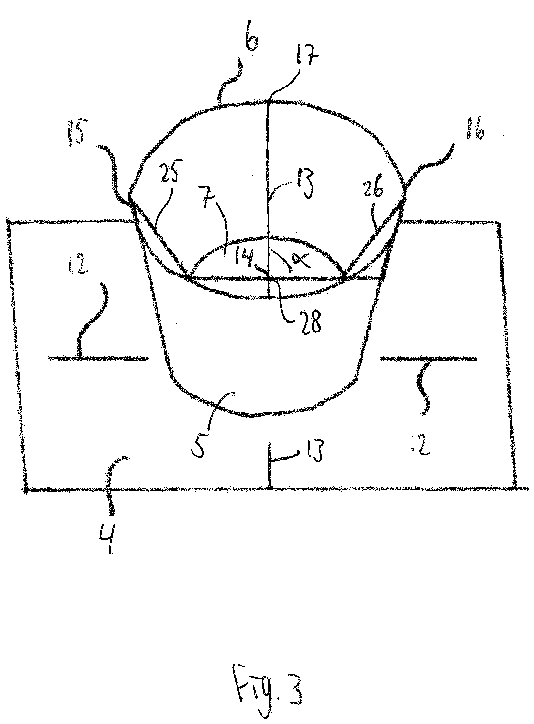

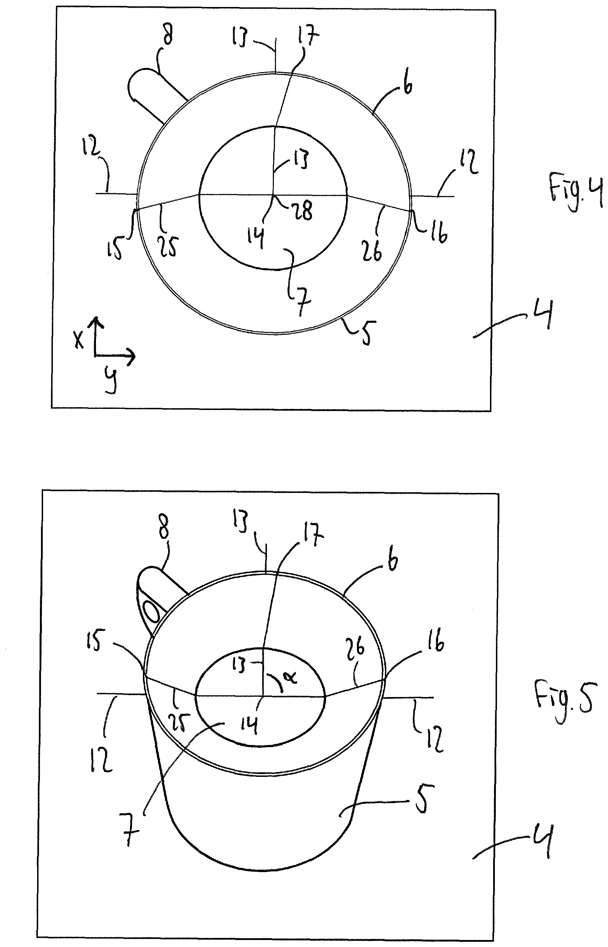

Optional sind die optischen Achsen 11, 21 zusätzlich parallel zueinander in y-Richtung versetzt, wodurch mit zunehmender Höhe des Getränkebehälters 5 ein Versatz der Lichtlinien 12, 13 in Richtung der x-Achse und der y-Achse entsteht. Durch diesen zusätzlichen Versatz lassen sich die auf dem Getränkebehälter 5 projizierten Lichtlinien 12, 13 leichter ermitteln. Der parallele Versatz geht hierbei insbesondere aus der Fig. 2 hervor. Die optischen Achse 11 und/oder die optische Achse 21 können parallel zu einer xz-Ebene ausgerichtet sein. Die optische Achse 11 der Projektionsvorrichtung 10 und die optische Achse 21 der Bildaufnahmeeinheit 20 können in y-Richtung einen parallelen Versatz d zwischen 0 mm und 300 mm aufweisen. In dem gezeigten Ausführungsbeispiel beträgt der Versatz d 10 mm (vgl. Fig. 4 und 5). Alternativ gibt es keinen Versatz, in diesem Fall gilt also d = 0 mm (vgl. Fig. 3).

Die Bildaufnahmeeinheit 20 ist ausgestaltet, den Getränkebehälter 5 und die durch die Projektionsvorrichtung 10 projizierten Lichtlinien 12, 13 zu erfassen. Üblicherweise ist die Bildaufnahmeeinheit 20 als Kamera, insbesondere CCD-Kamera ausgestaltet. Bildpunkte (Pixel) der von der Bildaufnahmeeinheit 20 aufgenommenen Bilder werden typischerweise in ein Weltkoordinatensystem und ein Maschinenkoordinaten überführt, bevor sie weiter verarbeitet werden. Hierzu werden oftmals mindestens eine Rotationsmatrix (Rotation um die x-Achse, Rotation um die y-Achse und/oder Rotation um die z-Achse) und ein Translationsvektor (Verschiebung entlang der x-, y- und/oder z-Achse) bestimmt.

Eine erste Koordinatentransformation kann die Umrechnung von Bildkoordinaten in das Weltkoordinatensystem beschreiben. Die z-Achse des Weltkoordinatensystems kann zunächst gleichbedeutend mit der optischen Achse 21 der Bildaufnahmeeinheit 20 sein. Ein Koordinatenursprung kann sich auf der Aufstellfläche 4 des Getränkeautomaten 1 befinden. Nach der Berechnung der Bildkoordinaten in Weltkoordinaten, kann eine Umrechnung in das Maschinenkoordinatensystem erfolgen. In diesem Koordinatensystem entspricht die z-Achse nicht mehr der optischen Achse 21 der Bildaufnahmeeinheit 20, sondern der Normalen der Aufstellfläche 4. Die durchgeführten Transformationen gehören zum Stand der Technik und sollen hier nicht näher erläutert werden.

Zur Bestimmung der für die geometrischen Transformationen benötigten Rotationsmatrizen und Translationsvektoren gibt es verschiedene Möglichkeiten. Eine erste Methode ist die Bestimmung der Werte mittels eines Kalibrierungsverfahrens. Bei einer zweiten Methode werden konstruktive Werte des Getränkeautomaten 1 verwendet.

Bei der Ermittlung der Rotationsmatrizen und Translationsvektoren mittels eines Kalibrierungsverfahrens kann wie folgt vorgegangen werden. Zur Kalibrierung kann ein Kalibrierungsmuster, wie ein Schachbrettmuster, waagerecht auf der Aufstellfläche 4 der Maschine platziert und anhand der Laserlinien ausgerichtet werden, beispielsweise derart, dass sich der Kreuzungspunkt 14 der Lichtlinien 12, 13 in der Mitte des Kalibrierungsmusters befindet. Dann wird mittels der Bildaufnahmeeinheit 20 eine Aufnahme des Kalibrierungsmusters gemacht. Dieser Vorgang kann mehrmals mit unterschiedlichen Versätzen zur Aufstellfläche 4 in Richtung der z-Achse der Maschine durchgeführt werden. Für jedes der aufgenommenen Bilder werden dann eine Rotationsmatrix und ein Translationsvektor bestimmt.

Zusätzlich oder alternativ können die mindestens eine Rotationsmatrix und der Translationsvektor auch durch konstruktive Werte bestimmt werden. Die relative Anordnung der Bildaufnahmeeinheit 20 ist nämlich durch ihre x-, y-und z-Positionen festgelegt. Auch liegen die optische Achse 21 der Bildaufnahmeeinheit 20 und die optische Achse 11 der Projektionsvorrichtung 10 durch die Ausrichtung der Bildaufnahmeeinheit 20 und der Projektionsvorrichtung 10 relativ zum Getränkeautomaten 1 konstruktiv fest. Daher können ein erster Winkel der optischen Achse 21 zur z-Achse und ein zweiter Winkel der optischen Achse 11 zur z-Achse geometrisch bestimmt werden. Das zugrunde liegende Koordinatensystem hat üblicherweise seinen Ursprung in dem auf die Aufstellfläche 4 projizierten Kreuzpunkt 14 des Laserlinien 12, 13. Ein dritter Winkel beschreibt üblicherweise eine Verdrehung der Projektionsvorrichtung 10 um die eigene Achse 11 und somit auch eine Verdrehung zur y-Achse des Getränkeautomaten 1. Idealerweise hat der dritte Winkel einen Wert Null. Da dies bei der Justierung und Ausrichtung der Projektionsvorrichtung 11 nur schwer zu erreichen ist, kann dieser Wert im eingebauten Zustand bestimmt werden. Hierfür kann eine diffus reflektierende Unterlage auf der Aufstellfläche 4 platziert werden. Danach kann ein Bild mit eingeschalteter Projektionsvorrichtung 10 aufgenommen werden. Die Koordinaten der Lichtlinien 12, 13 des aufgenommen Bildes können zur Bestimmung des dritten Winkels verwendet werden. Die Rotationsmatrizen und der Translationsvektor können anschließend nach der Bestimmung der drei genannten Winkel (erster, zweiter und dritter Winkel) und der Position der Bildaufnahmeeinheit 20 aufgestellt werden.

Intrinsische Kalibrierungsparameter der Bildaufnahmeeinheit 20 sind insbesondere durch die abbildende Optik der Bildaufnahmeeinheit 20 vorgegeben und hängen somit von jedem Einzelsystem ab.

Optional ist mindestens ein optisches Filter vorgesehen, um den Kontrast zwischen der abgebildeten Lichtlinien 12, 13 und dem Bildhintergrund zu erhöhen. Denkbar ist zum Beispiel eine Kombination aus einem Langpassfilter und einem Kurzpassfilter, welche optional jeweils als Absorptionsfilter ausgestaltet sind.

Die Projektionsvorrichtung 10 kann zwischen dem Getränkeauslass 3 und der Bildaufnahmeeinheit 20 angeordnet sein, beispielsweise in x-Richtung senkrecht zur z-Achse zwischen dem Getränkeauslass 3 und der Bildaufnahmeeinheit 20.

Die Auswerteeinheit 24 ist oftmals über Signalleitungen mit der Bildaufnahmeeinheit 20 und der Projektionsvorrichtung 10 verbunden, um mit diesen zu kommunizieren und diese ansteuern zu können. Es kann auch eine zusätzliche Steuereinheit vorgesehen sein, welche mit der Bildaufnahmeeinheit 20, der Projektionsvorrichtung 10 und der Auswerteeinheit 24 verbunden ist, um mit diesen zu kommunizieren und diese anzusteuern. Weiter kann die Auswerteeinheit 24 und/oder die Steuereinheit mit der Getränkezubereitungseinheit 40 verbunden sein oder mit der Getränkezubereitungseinheit 40 eine Einheit bilden. Die Kommunikationsverbindung zwischen den Einheiten 10, 20, 24, 40 kann eine drahtgebundene oder eine drahtlose Verbindung umfassen. Über die Kommunikation zwischen den Einheiten 10, 20, 24, 40 können zum Beispiel Daten, Signale, Steuerbefehle und/oder Messwerte ausgetauscht werden. Die Auswerteeinheit 24 und/oder die Steuereinheit können ausgestaltet sein, empfangene Daten zu verarbeiten oder zu bearbeiten oder auszuwerten.

Die Auswerteeinheit 24 ist ausgestaltet, anhand der durch die Bildaufnahmeeinheit aufgenommen Lichtlinien 12, 13 mindestens eine Innenkonturlinie 25, 26 des Getränkebehälters 5 und eine Mittelpunktlinie 27 des Getränkebehälters 5 zu ermitteln, und anhand eines Rotationskörpers, der durch Rotation der Innenkonturlinie 25, 26 um die Mittelpunktlinie 27 entsteht, das Volumen des Getränkebehälters 5 zu bestimmen.

Die Ergebnisse der Auswerteeinheit 24 können von der Steuereinheit benutzt werden, um die Projektionsvorrichtung 10, die Bildaufnahmeeinheit 20, die Getränkezubereitungseinheit 40 und/oder eine Reinigungseinheit anzusteuern. Insbesondere kann die Steuereinheit ausgebildet sein, eine Getränkemenge und/oder eine Getränkerezeptur in Abhängigkeit von dem bestimmten Volumen des Getränkebehälters 5 und/oder dem bestimmten Restvolumen des zumindest teilweise mit Flüssigkeit gefüllten Getränkebehälters 5 zu steuern.

Nachstehend wird beschrieben, wie ein verfahrensmäßiger Ablauf zum Bestimmen eines Volumens eines Getränkebehälters 5 aussehen kann. Das Verfahren wird insbesondere mit der vorbeschriebenen Vorrichtung 2 und dem Getränkeautomaten 1 durchgeführt.

Das Verfahren beginnt durch die Platzierung eines Getränkebehälters 5 auf der Aufstellfläche 4 des Getränkeautomaten 1. Der Getränkebehälter 5 wird in der Regel von einem Benutzer frei Hand relativ zentral unter dem Getränkeauslass 3 des Getränkeautomaten 1 platziert. Zum Starten der Messung wählt der Benutzer das gewünschte Getränk, z.B. Espresso oder Cappuccino, auf der Bedienoberfläche 50 Getränkeautomaten 1 aus. Der Start der Messung kann auch durch Erkennung des Getränkebehälters 5 durch die Bildaufnahmeeinheit 20 ausgelöst werden.

Hiernach wird ein Bild von dem Getränkebehälter 5 aufgenommen. Für die Messung des Getränkebehälters 5 werden in der Regel zwei Aufnahmen durch die Bildaufnahmeeinheit 20 gemacht. Eine erste Aufnahme wird dabei ohne die Lichtlinien 12, 13 gemacht und wird für die Bestimmung einer Helligkeit des Umgebungslichtes verwendet. Anhand dieser ersten Aufnahme ist ein Rückschluss auf eine Farbe bzw. eine Graustufe des Getränkebehälters 5 möglich. Hierfür kann eine durchschnittliche Helligkeit des gesamten Bildes mit einer durchschnittlichen Helligkeit eines vorgegebenen Rechteckes verglichen und ein $\Delta B$ (durchschnittliche Intensität des Rechtecks relativ zur durchschnittlichen Intensität des gesamten Bildes) berechnet. $\Delta B$ gibt Aufschluss über die Farbe bzw. die Graustufe des Getränkebehälters 5. Das genannte Rechteck kann vollständig mit dem Getränkebehälter 5 überlappen, also im Bild vollständig innerhalb des Getränkebehälters 5 liegen, und kann sich hierzu zum Beispiel in der Bildmitte befinden.

Danach wird die Projektionsvorrichtung 10 eingeschaltet, um die Lichtlinien 12, 13 auf die horizontale Aufstellfläche 4 und den darauf abgestellten Getränkebehälter 5 zu projizieren.

Anschließend wird eine zweite Aufnahme des Getränkebehälters 5 mit den darauf projizierten Lichtlinien 12, 13, also mit eingeschalteter Projektionsvorrichtung 10, durchgeführt. Bei der zweiten Aufnahme wird ein $\Delta L$ zwischen der durchschnittlichen Intensität / Helligkeit der gesamten zweiten Aufnahme und des genannten Rechteckes berechnet, womit der Grad der Reflexionen in der zweiten Aufnahme bewertet werden kann.

Die Werte für $\Delta B$ und $\Delta L$ sind üblicherweise abhängig von der Belichtungssituation, also der durchschnittlichen Intensität bzw. Helligkeit $\varnothing$ I der ersten Aufnahme. Über die Beziehung g = $\Delta B * \Delta L / \varnothing$ I kann ein Faktor g ermittelt werden. Der Faktor g kann benutzt werden, um eine minimale Intensität bzw. Helligkeit eines Pixels zu bestimmen, bei der dieser Pixel als Abbildung einer Lichtlinie 12, 13 detektiert wird.

Hierbei müssen sich die Adjektive "erstes" und "zweites" nicht auf eine bestimmte Reihenfolge beziehen. Es kann zum Beispiel vorgesehen sein, dass zunächst die zweite Aufnahme und anschließend die erste Aufnahme gemacht werden, oder andersherum. Wie bereits voranstehend beschrieben, sind ebenso andere Kombinationen von Bildaufnahmen vorstellbar. Beispielsweise ist die Aufnahme von drei Bildern, oder die Aufnahme von lediglich einem Bild zur anschließenden Bestimmung der Innenkonturlinie möglich.

Anschließend können also die Positionen der Lichtlinien 12, 13 auf dem Getränkebehälter 5 durch Helligkeitsvergleich aus der zweiten Aufnahme extrahiert werden.

Die zweite Aufnahme bzw. die erste Lichtlinie 12 kann in zwei Bereiche 25, 26 unterteilt werden. Als Grenze der beiden Bereiche kann beispielsweise die Lichtlinie 13 oder der Kreuzungspunkt 14 dienen. Nun sind zwei Innenkonturlinien 25, 26 der ersten Lichtlinie 12 bekannt.

Anschließend kann eine Position des oberen Getränkebehälterrandes 6 bestimmt werden. Bei der Bestimmung des Getränkebehälterrandes 6 wird angenommen, dass dieser sich horizontal parallel zur xy-Ebene erstreckt und die höchste Erhebung des Getränkebehälters 5 in z-Richtung darstellt. Außerdem wird davon ausgegangen, dass der Getränkebehälterrand 6 kreisförmig ist. Unter den gemachten Voraussetzungen kann der Getränkebehälterrand 6 durch drei Punkte 15, 16, 17 eindeutig festgelegt werden.

Da der Getränkebehälterrand 6 üblicherweise eine endliche Breite hat, kann der dort projizierte Teil der jeweiligen Lichtlinie 12, 13 näherungsweise als Lichtpunkt 15, 16, 17 betrachtet werden, vgl. Fig. 3-5. Die Auswerteeinheit 24 kann ausgestaltet sein, die auf dem oberen Getränkebehälterrand 6 erzeugten Lichtpunkte 15, 16, 17 der Lichtlinien 12, 13 zu ermitteln. Die drei auf dem oberen Getränkebehälterrand 6 erzeugten Lichtpunkte 15, 16, 17 können die Eckpunkte eines Dreiecks bilden. Die Lichtpunkte 15, 16 sind dabei der ersten Lichtlinie 12 zugeordnet, während der Lichtpunkt 17 der zweiten Lichtlinie 13 zugeordnet ist.

Durch den zuvor genannten parallelen Versatz der Bildaufnahmeeinheit 20 und der Projektionsvorrichtung 10 in y-Richtung entsteht ebenso ein Versatz der Lichtlinie 13 in Abhängigkeit der Höhe des Getränkebehälters 5. Mit zunehmender Höhe des Getränkebehälters 5 entsteht hierdurch aus der Perspektive der Bildaufnahmeeinheit 20 ein Versatz der auf der Getränkebehälteroberfläche projizierten Laserlinien. Hierdurch kann der Lichtpunkt 17 auf dem Getränkebehälterrand 6 relativ einfach gefunden werden (vgl. Fig. 4 und Fig. 5). Alternativ gibt es keinen parallelen Versatz der optischen Achsen 11, 21 in y-Richtung. Hierdurch entspricht die durch die Bildaufnahmeeinheit 20 aufgenommene Projektion der Laserlinie 13 auf der Getränkebehälteroberfläche etwa einer geraden Linie, vgl. Fig. 3.

Der Umkreis des durch die Lichtpunkte 15, 16, 17 gebildeten Dreiecks korrespondiert mit dem Getränkebehälterrand 6 und bildet somit die gesuchte Position des Getränkebehälterrandes 6. Über die Position des Getränkebehälterrandes 6 kann wiederum ein Mittelpunkt des Getränkebehälterrandes 6 bestimmt werden. Eine Linie, welche den Mittelpunkt des Getränkebehälterrandes 6 schneidet und senkrecht zu einer Bodenfläche 7 des Getränkebehälters 5 ausgerichtet ist, kann dann die Mittelpunktlinie 27 des Getränkebehälters 5 bilden. Mit anderen Worten wird der Mittelpunkt des Getränkebehälterrandes 6 in Höhenrichtung (z-Richtung) als Linie erweitert, um die Mittelpunktlinie 27 zu bilden.

Alternativ kann auch die Position des Kreuzungspunktes 14 auf der Bodenfläche des Getränkebehälters 7 benutzt werden, um die Mittelpunktlinie 27 zu bestimmen. Wenn nämlich der Benutzer den Getränkebehälter 5 derart auf die Aufstellfläche 4 hinstellt, dass ein Mittelpunkt der Bodenfläche 7 mit dem Kreuzungspunkt 14 überlappt, kann der Kreuzungspunkt 14 senkrecht zur Bodenfläche 7 in Höhenrichtung als Linie erweitert werden, um die Mittelpunktlinie 27 zu bilden. Als Positionierungshilfe kann mittig auf der Bodenfläche 7 des Getränkebehälters 5 eine Markierung vorgesehen sein, zum Beispiel in Form eines Punkts oder Fadenkreuzes.

Insgesamt sind bis jetzt also zwei Innenkonturlinien 25, 26 und die Mittelpunktlinie 27 des Getränkebehälters 5 anhand der Positionen der Lichtlinien 12, 13, der Lichtpunkte 15, 16, 17 auf dem Getränkebehälter 5 und/oder des Kreuzungspunktes 14 bestimmt.

Nun kann das gesuchte Volumen des Getränkebehälters 5 anhand eines Rotationskörpers, der durch Rotation der Innenkonturlinie 25, 26 um die Mittelpunktlinie 27 entsteht, bestimmt werden.

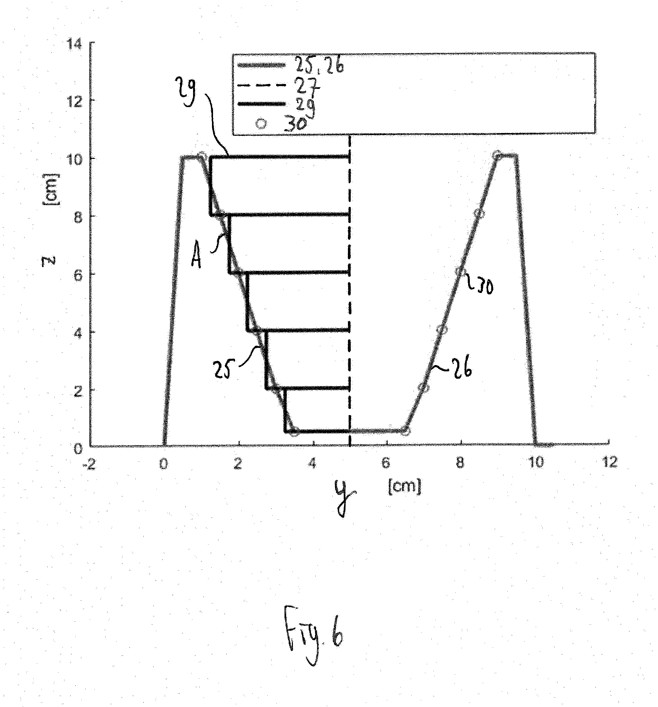

Das Volumen V des Getränkebehälters 5 berechnet sich zum Beispiel als numerische Annäherung an ein Volumenintegral zwischen Getränkebehälterkontur 25, 26 und der Mittelpunktachse 27 (Rotationsachse) des Getränkebehälters 5, vgl. Fig. 6. Die numerische Annäherung geschieht üblicherweise mithilfe der Trapezregel. Dabei wird eine Trapezfläche A zwischen zwei Punkten 30 berechnet, welche anschließend um die Mittelpunktachse 27 rotiert wird. Da die bestimmte Linie, Werte auf beiden Seiten der Rotationsachse aufweisen kann, wird das Volumen V nur im Intervall zwischen Behälterrand und Achse berechnet.

Die Trapezfläche A berechnet sich wie folgend:

$$A_i = \frac{y_i + y_{i+1}}{2} * (z_i - z_{i+1})$$

Das Volumen V des Getränkebehälters 5 ist dann gleich der Summe der rotierten Flächen:

$$V = \sum_{i=0}^{n} A_i * \pi r_i$$

Um die Genauigkeit zu erhöhen, können sowohl für die Innenkonturlinie 25 als auch für die Innenkonturlinie 26 Rotationskörper berechnet werden. Das Volumen des Getränkebehälters 5 wird dann durch Mittelung der beiden Rotationskörper berechnet. Es kann somit jeweils ein Volumen $V_1$ und $V_2$ für jede Innenkonturlinie 25, 26 des Getränkebehälters 5 berechnet werden. Im Regelfall wird das Mittel beider Volumen $V_1$ und $V_2$ als finales Volumen V gebildet. Beide Volumen $V_1$ und $V_2$ können wahlweise noch mit einem Korrekturfaktor beaufschlagt werden, der etwaige positionsabhängige Messfehler korrigiert.

Das berechnete Volumen V beschreibt das Volumen des Getränkebehälters 5 ausgehend von dem Getränkebehälterrand 6, also der Oberkante des Getränkebehälters 5. Eine von dem Getränkeautomaten 1 ausgegebene Füllmenge sollte daher um einen Offset verringert werden. Um eine Anwendung der Messung auf Behälter 5 mit unterschiedlichsten Volumen zu ermöglichen, kann sich der Offset zum Beispiel aus einem absoluten und einem prozentualen Anteil vom bestimmten Volumen V zusammensetzen.

Nach der Bestimmung des Volumens des Getränkebehälters 5 kann die Auswerteeinheit 24 ausgestaltet sein, eine Ausgabemenge und/oder eine Zubereitungsrezeptur eines in den Getränkebehälter 5 zu füllenden Getränks in Abhängigkeit des bestimmten Volumens zu bestimmen, und die Getränkezubereitungseinheit 40 kann dann entsprechend angesteuert werden. Alternativ wird die Füllmenge an die Getränkezubereitungseinheit 40 übermittelt, welche anhand dieser Information die Ausgabemenge und/oder eine Zubereitungsrezeptur des ausgewählten Getränkes anpassen kann.

Mit der genannten Volumenbestimmung durch die Auswerteeinheit 24 können sowohl das Volumen eines leeren Getränkebehälters 5 als auch ein Restvolumen eines zumindest teilweise mit Flüssigkeit gefüllten Getränkebehälters 5 bestimmt werden. Hierdurch kann eine im Getränkebehälter 5 vorhandene Flüssigkeitsmenge gemessen und/oder überwacht werden. Mit der Bestimmung des Restvolumens kann zum Beispiel die Flüssigkeitsmenge in dem Getränkebehälter 5 während einer Getränkeausgabe, Reinigung, Wartung und/oder Entkalkung des Getränkeautomaten 1 bestimmt und/oder überwacht werden. Falls das Restvolumen einen vorbestimmten Wert unterschreitet, bzw. die Flüssigkeitsmenge in dem Behälter 5 einen vorbestimmten Wert überschreitet, kann die Vorrichtung 2 ausgestaltet sein, einen Warnhinweis auszugeben und/oder die Flüssigkeitsausgabe zu stoppen. Der Warnhinweis kann zum Beispiel ein optischer Warnhinweis, ein akustischer Warnhinweis, ein Vibrationswarnhinweis und/oder eine Kombination aus diesen sein.

Die Auswerteeinheit 24 kann ausgestaltet sein, die momentan in dem Getränkebehälter 5 vorhandene Flüssigkeitsmenge durch Vergleich der beiden Volumenmessungen (leerer Getränkebehälter / teilweise gefüllter Getränkebehälter oder voller Getränkebehälter) zu bestimmen. Die Volumenmessung kann vor, nach und/oder während der Befüllung des Getränkebehälters 5 mit Flüssigkeit erfolgen.

In einer weiteren Ausgestaltung kann die Auswerteeinheit 24 ausgestaltet sein, die Flüssigkeitsmenge in dem zumindest teilweise mit Flüssigkeit gefüllten Getränkebehälter 5 mit einer Ausgabemenge zu vergleichen. Hierbei kann die Ausgabemenge manuell durch den Benutzer über die Bedienoberfläche 50 eingegeben werden und anschließend durch die Getränkezubereitungseinheit 40 bereitgestellt werden. Falls die tatsächliche Flüssigkeitsmenge in dem Getränkebehälter 5 um einen vorbestimmten Faktor oder eine vorbestimmte Menge von der Ausgabemenge abweicht, kann die Auswerteeinheit 24 ausgestaltet sein, einen Warnhinweis auszugeben. Falls beispielsweise die durch die Getränkezubereitungseinheit 40 bereitgestellte Ausgabemenge deutlich größer ist, als die tatsächlich in dem Behälter 5 gemessene Flüssigkeitsmenge, kann dies ein Hinweis auf Verstopfungen oder Undichtigkeiten im System sein.

Die durch die Auswerteeinheit 24 gemessene Flüssigkeitsmenge in dem Getränkebehälter 5 kann außerdem für eine Kalibrierung eines Volumenflusses der Getränkezubereitungseinheit 40 verwendet werden. Während der Abgabe des Getränks in den Getränkebehälter 5 kann eine Zeit gemessen werden, z.B. durch eine in der Vorrichtung 2, der Auswerteeinheit 24 oder der Getränkezubereitungseinheit 40 vorgesehene Zeitmesseinheit. Die Auswerteeinheit 24 kann mit der gemessenen Zeit und der gemessenen Flüssigkeitsmenge im Behälter 5 den Volumenfluss in Volumen pro Zeit berechnen. Der berechnete Volumenfluss (Ist-Wert) kann dann mit einem gewünschten Volumenfluss (Soll-Wert) verglichen werde, wodurch die Getränkezubereitungseinheit 40 kalibriert werden kann.

Außerdem kann eine Dosierung der ausgegebenen Flüssigkeit überwacht werden, um Dosierschwankungen zu verringern oder zu vermeiden. Dies kann zum Beispiel hilfreich sein, wenn verschiedene Flüssigkeiten, etwa Milch und Kaffee, je nach Wunsch des Benutzers in verschiedenen Mengen in den Getränkebehälter 5 abgefüllt werden sollen. Durch Vergleich mit der bereits vor dem Abfüllen der Flüssigkeit in dem Getränkebehälter 5 vorhandene Flüssigkeitsmenge kann für jede Flüssigkeit die jeweilige Teilmenge in den Getränkebehälter 5 bestimmt werden. Werden beispielsweise eine erste Flüssigkeit und eine zweite Flüssigkeit nacheinander in den Getränkebehälter 5 gefüllt, dann kann nach dem Füllen des Getränkebehälters 5 mit der ersten Flüssigkeit eine erste Teilmenge der ersten Flüssigkeit bestimmt werden. Eine zweite Teilmenge der anschließend in den Getränkebehälter 5 abzufüllenden zweiten Flüssigkeit kann dann je nach Zubereitungsrezeptur auf die erste Teilmenge der ersten Flüssigkeit abgestimmt werden. Die Messergebnisse der Auswerteeinheit 24 werden der Steuereinheit mitgeteilt, welche daraufhin eine Steuerung der Getränkezubereitungseinheit 40 veranlassen kann. So kann bei der Zubereitung von Latte Macchiato oder Cappuccino die jeweiligen Teilmengen von Kaffee, Milch und Milchschaum überwacht und gesteuert werden.

Wenn verschiedene Getränkebehältertypen und deren Volumen im Voraus bekannt sind, kann das durch die Vorrichtung 2 bestimmte Volumen des Getränkebehälters 5 mit den vorbekannten Volumen verglichen werden. Falls das gemessene Volumen von sämtlichen Volumen der vorbekannten Getränkebehälter 5 abweicht, kann zum Beispiel ein falsch positionierter Getränkebehälter 5 oder die Verwendung eines falschen Getränkebehältertyps erkannt werden. In diesem Fall kann ein entsprechender Warnhinweis ausgegeben werden oder die Ausgabemenge der Flüssigkeit angepasst werden.

Es sei angemerkt, dass statt des genannten Getränkebehälters 5 auch andere Behälter 5 wie Reinigungsbehälter, Wartungsbehälter oder Entkalkungsbehälter verwendet werden können. Die zuvor beschriebene Volumenmessung bezieht sich also auch ausdrücklich auf diese Behälter. Dies kann hilfreich sein, falls ein mit der zuvor beschriebenen Vorrichtung 2 ausgestatteter Getränkeautomat 1 gereinigt, gewartet und/oder entkalkt werden soll. Auch in diesen Fällen, also zum Beispiel während eines Entkalkungsvorgangs, eines Reinigungsvorgangs oder eines Wartungsvorgangs, können die Flüssigkeitsmenge und/oder das Restvolumen des unter dem Getränkeauslass 3 befindlichen Behälters 5 gemessen, überwacht und/oder gesteuert werden. Ein Überlaufen des Behälters 5 kann folglich verhindert werden.

Damit die Lichtlinien 12, 13 auf dem Getränkebehälter 5 besser von der Umgebung unterschieden werden können, kann die horizontale Aufstellfläche 4 ausgestaltet sein, das darauf projizierte Licht zumindest überwiegend (also mehr als 50%) zu absorbieren und/oder diffus zu reflektieren.

Bestimmte optische Eigenschaften der Behälteroberfläche, insbesondere der Behälterinnenoberfläche, können die Messungen positiv beeinflussen. Um eine möglichst klare Lichtlinie 12, 13 abzubilden, kann das Material des Getränkebehälters 5 oder zumindest eine Innenbeschichtung des Getränkebehälters 5 vorzugsweise lichtundurchlässig sein. Weiter können die Lichtlinien 12, 13 insbesondere bei einer hohen Oberflächenrauigkeit zuverlässig erkannt werden. Bei einer hohen Oberflächenrauigkeit ist der Anteil des diffus zurückreflektierten Lichts höher als bei spiegelnden oder polierten Oberflächen. Vorteilhafte Materialien des Getränkebehälters 5 umfassen lichtundurchlässige Materialien mit einer matten Oberfläche wie zum Beispiel Keramik, Pappe, Metall, Holz, Kunststoff oder Glas wahlweise mit einer entsprechenden Oberflächenbehandlung oder Beschichtung.

Die Form des Getränkebehälters kann ebenfalls einen Einfluss auf die Messergebnisse haben. So soll der Getränkebehälter 5 rotationssymmetrisch sein. Aufgrund der Rotationssymmetrie kann nämlich, wie oben dargelegt, die Position des Getränkebehälterrandes 6 über den Umkreis der Lichtpunkte 15, 16, 17 bestimmt werden. Außerdem kann ein Rotationskörper gebildet werden, welcher der inneren Form des Getränkebehälters 5 mit großer Genauigkeit entspricht.

Weiter erstreckt sich der Getränkebehälterrand 6 vorzugsweise parallel zur xy-Ebene und bildet die höchste Erhebung des Getränkebehälters 5. Ist dies nicht der Fall und bildet sich eine der Lichtlinien 12, 13 auf einem höheren oder gleich hohen Punkt ab, kann das zu einer Verschiebung des Behältermittelpunktes und somit auch der Mittelpunktachse 27 führen.

Außerdem soll ein unterer Durchmesser des Getränkebehälters 5 im Bereich der Bodenfläche 7 kleiner sein als ein oberer Durchmesser im oberen Bereich des Getränkebehälters und im Bereich des Getränkebehälterrandes 6. Insbesondere soll der Durchmesser von unten nach oben abschnittsweise gleichbleiben oder sich vergrößern, aber nicht verkleinern. Wenn sich der Durchmesser von unten nach oben hin verkleinert, kann es vorkommen, dass der Behälterrand 6 die Lichtlinien 12, 13 verdeckt, wodurch die Innenkonturlinie 25, 26 nicht mehr abgebildet werden.

Es versteht sich, dass die in den Figuren 1-6 dargestellten und oben beschriebenen Ausführungsformen miteinander kombiniert werden können, sofern sich die Kombinationen nicht gegenseitig ausschließen. Merkmale, die nur in Bezug auf die oben beschriebene Vorrichtung 2 genannt wurden, können auch für den Getränkeautomaten 1 oder das beschriebene Verfahren beansprucht werden und andersherum.

Bezugszeichenliste:

1 Getränkeautomat
2 Vorrichtung zum Bestimmen eines Volumens eines Getränkebehälters
3 Getränkeauslass
4 Aufstellfläche
5 Getränkebehälter
6 Getränkebehälterrand
7 Bodenfläche des Getränkebehälters
8 Henkel
10 Projektionsvorrichtung
11 optische Achse
12 erste Lichtlinie
13 zweite Lichtlinie
14 Kreuzungspunkt
15 Lichtpunkt
16 Lichtpunkt
17 Lichtpunkt
20 Bildaufnahmeeinheit
21 optische Achse
22 Vorderseite
23 Rückseite
24 Auswerteeinheit
25 erste Innenkonturlinie
26 zweite Innenkonturlinie
27 Mittelpunktlinie
28 Mittelpunkt
29 Volumensegment
30 Messpunkt
40 Getränkezubereitungseinheit
50 Bedienoberfläche
$\alpha$ Winkel zwischen Lichtlinien
$\beta$ Winkel zwischen Bildaufnahmeeinheit und Projektionsvorrichtung
d Abstand in y-Richtung zwischen Bildaufnahmeeinheit 20 und Projektionsvorrichtung 10

**Patentansprüche**

1. Vorrichtung (2) zum Bestimmen eines Volumens eines Behälters (5), insbesondere eines Getränkebehälters, umfassend

   - eine horizontale Aufstellfläche (4) zum Abstellen des Behälters (5),

   - ein Projektionsvorrichtung (10), welche ausgestaltet ist, zwei Lichtlinien (12, 13) auf die Aufstellfläche (4) und den darauf abgestellten Behälter (5) zu projizieren,
   - eine Bildaufnahmeeinheit (20), welche unter einem Winkel ($\beta$) zur Projektionsvorrichtung (10) auf die Aufstellfläche (4) gerichtet ist, und ausgestaltet ist, den Behälter (5) und die durch die Projektionsvorrichtung (10) projizierten Lichtlinien (12, 13) zu erfassen, und
   - eine Auswerteeinheit (24), welche ausgestaltet ist, anhand der aufgenommen Lichtlinien (12, 13) mindestens eine Innenkonturlinie (25, 26) des Behälters (5) und eine Mittelpunktlinie (27) des Behälters (5) zu ermitteln, und anhand eines Rotationskörpers, der durch Rotation der Innenkonturlinie (25, 26) um die Mittelpunktlinie (27) entsteht, das Volumen des Behälters (5) zu bestimmen.

2. Vorrichtung (2) nach Anspruch 1, wobei die Lichtlinien (12, 13) winklig zueinander ausgerichtet sind, wobei die Lichtlinien (12, 13) vorzugsweise in einem Winkel ($\alpha$) von mindestens 15° und/oder höchstens 175° zueinander ausgerichtet sind, insbesondere etwa 90° und/oder wobei die Lichtlinien (12, 13) einander kreuzen.

3. Vorrichtung (2) nach einem der vorstehenden Ansprüche, wobei die Auswerteeinheit (24) ausgestaltet ist:

   - auf einem oberen Behälterrand (6) erzeugte Lichtpunkte (15, 16, 17) der Lichtlinien (12, 13) zu ermitteln, und
   - die Mittelpunktlinie (27) des Behälters (5) anhand der Lichtpunkte (15, 16, 17) bestimmen.

4. Vorrichtung (2) nach einem der vorstehenden Ansprüche, wobei die Auswerteeinheit (24) ausgestaltet ist:

   - drei auf dem oberen Behälterrand (6) erzeugte Lichtpunkte (15, 16, 17) zu bestimmen, welche ein Dreieck bilden, und
   - über einen Umkreis des Dreiecks die Mittelpunktlinie (27) des Behälters (5) zu bestimmen.

5. Vorrichtung (2) nach einem der vorstehenden Ansprüche, wobei der Winkel ($\beta$) der Bildaufnahmeeinheit (20) zur Projektionsvorrichtung (10) mindestens 2° ist und/oder höchstens 30°, vorzugsweise höchstens 10° ist.

6. Vorrichtung nach einem der vorstehenden Ansprüche, wobei eine optische Achse (11) der Projektionsvorrichtung (10) und eine optische Achse (21) der Bildaufnahmeeinheit (20) parallel versetzt sind.

**7.** Vorrichtung (2) nach einem der vorstehenden Ansprüche, wobei die Auswerteeinheit (24) ausgestaltet ist, anhand der aufgenommen Lichtlinien (12, 13) zwei Innenkonturlinien (25, 26) des Behälters (5) zu ermitteln, und für jede Innenkonturlinie (25, 26) einen Rotationskörper zu bestimmen, wobei das Volumen des Behälters (5) durch Mittelung der beiden Rotationskörper bestimmt wird.

**8.** Vorrichtung (2) nach einem der vorstehenden Ansprüche, wobei die Auswerteeinheit ausgebildet ist, die Innenkonturlinien anhand von höchstens drei von der Bildaufnahmeeinheit aufgenommenen Bildern, vorzugsweise höchstens zwei von der Bildaufnahmeeinheit aufgenommenen Bildern, besonders bevorzugt lediglich einem von der Bildaufnahmeeinheit aufgenommenem Bild zu ermitteln.

**9.** Vorrichtung (2) nach einem der vorstehenden Ansprüche, wobei die Projektionsvorrichtung (10) mindestens einen Linienlaser und/oder ein Kreuzlasermodul umfasst, welcher oder welches ausgestaltet ist, die Lichtlinien (12, 13) zu erzeugen.

**10.** Vorrichtung (2) nach einem der vorstehenden Ansprüche, wobei die horizontale Aufstellfläche (4) ausgestaltet ist, das projizierte Licht zu absorbieren und/oder zu diffus zu reflektieren.

**11.** Vorrichtung (2) nach einem der vorstehenden Ansprüche, wobei die Auswerteeinheit (24) ausgestaltet ist, anhand des bestimmten Volumens des Behälters (5) eine Ausgabemenge und/oder eine Zubereitungsrezeptur eines in den Behälter (5) zu füllenden Getränks zu bestimmen.

**12.** Getränkeautomat (1), umfassend die Vorrichtung (2) nach einem der vorstehenden Ansprüche.

**13.** Verfahren zum Bestimmen eines Volumens eines Behälters (5), insbesondere eines Getränkebehälters, umfassend die Schritte:

- Projizieren von zwei Lichtlinien (12, 13) auf eine horizontale Aufstellfläche (4) und den darauf abgestellten Behälter (5);
- Aufnehmen eines Bildes des Behälters (5) mit den darauf projizierten Lichtlinien (12, 13) und/oder Aufnehmen von höchstens drei Bildern des Behälters, in denen die auf den Behälter projizierten Lichtlinien erfasst werden;
- Ermitteln mindestens einer Innenkonturlinie (25, 26) des Behälters (5) und einer Mittelpunktlinie (27) des Behälters (5) anhand der Positionen der Lichtlinien (12, 13) auf dem Behälter (5); und
- Bestimmen des Volumens des Behälters (5) anhand eines Rotationskörpers, der durch Rotation der Innenkonturlinie (25, 26) um die Mittelpunktlinie (27) entsteht.

**14.** Verfahren nach Anspruch 13, mit den zusätzlichen Schritten:

- Ermitteln von auf einem oberen Behälterrand (6) projizierten Lichtpunkten (15, 16, 17); und
- Bestimmen der Mittelpunktlinie (27) des Behälters (5) anhand der Lichtpunkte (15, 16, 17).

**15.** Verfahren nach einem der Ansprüche 13-14, welches mit der Vorrichtung (2) nach einem der Ansprüche 1-11 oder dem Getränkeautomaten nach Anspruch 12 durchgeführt wird.

**Claims**

**1.** A device (2) for determining a volume of a container (5), in particular a beverage container, comprising

- a horizontal support surface (4) for placing the container (5),
- a projection device (10), which is configured to project two light lines (12, 13) onto the support surface (4) and the container (5) placed thereon,
- an image capturing unit (20), which is directed at an angle ($\beta$) to the projection device (10) onto the support surface (4) and is configured to capture the container (5) and the light lines (12, 13) projected by the projection device (10), and
- an evaluation unit (24), which is configured to determine at least one inner contour line (25, 26) of the container (5) and a center line (27) of the container (5) on the basis of the captured light lines (12, 13), and to determine the volume of the container (5) on the basis of a rotation body, which is formed by rotation of the inner contour line (25, 26) about the center line (27).

**2.** The device (2) according to claim 1, wherein the light lines (12, 13) are aligned at an angle to one another, wherein the light lines (12, 13) are preferably aligned at an angle ($\alpha$) of at least 15° and/or at most 175° relative to one another, in particular about 90°, and/or wherein the light lines (12,13) intersect one another.

**3.** The device (2) according to any one of the preceding claims, wherein the evaluation unit (24) is configured:

- to determine light points (15, 16, 17) of the light lines (12, 13) generated on an upper container edge (6), and
- to determine the center line (27) of the container (5) on the basis of the light points (15, 16, 17).

**4.** The device (2) according to any one of the preceding claims, wherein the evaluation unit (24) is configured:

- to determine three light points (15, 16, 17) generated on the upper container edge (6) which form a triangle, and
- to determine the center line (27) of the container (5) from a circumference of the triangle.

**5.** The device (2) according to any one of the preceding claims, wherein the angle (β) of the image capturing unit (20) to the projection device (10) is at least 2° and/or at most 30°, preferably at most 10°.

**6.** The device according to any one of the preceding claims, wherein an optical axis (11) of the projection device (10) and an optical axis (21) of the image capturing unit (20) are offset in parallel.

**7.** The device (2) according to any one of the preceding claims, wherein the evaluation unit (24) is configured to determine two inner contour lines (25, 26) of the container (5) on the basis of the captured light lines (12, 13), and to determine a rotation body for each inner contour line (25, 26), wherein the volume of the container (5) is determined by averaging the two rotation bodies.

**8.** The device (2) according to any one of the preceding claims, wherein the evaluation unit is configured to determine the inner contour lines on the basis of at most three images captured by the image capturing unit, preferably at most two images captured by the image capturing unit, particularly preferably only one image captured by the image capturing unit.

**9.** The device (2) according to any one of the preceding claims, wherein the projection device (10) comprises at least one line laser and/or one cross-laser module, which is configured to generate the light lines (12, 13).

**10.** The device (2) according to any one of the preceding claims, wherein the horizontal support surface (4) is configured to absorb and/or diffusely reflect the projected light.

**11.** The device (2) according to any one of the preceding claims, wherein the evaluation unit (24) is configured to determine a dispensing amount and/or a preparation recipe of a beverage to be filled into the container (5) on the basis of the determined volume of the container (5).

**12.** A beverage dispenser (1), comprising the device (2) according to any one of the preceding claims.

**13.** A method for determining a volume of a containers (5), in particular a beverage container, comprising the steps:

- projecting two light lines (12, 13) onto a horizontal support surface (4) and container (5) placed thereon;
- capturing an image of the container (5) with the light lines (12, 13) projected thereon and/or capturing at most three images of the container, in which the light lines projected onto the container are captured;
- determining at least one inner contour line (25, 26) of the container (5) and a center line (27) of the container (5) on the basis of the positions of the light lines (12, 13) on the container (5); and
- determining the volume of the container (5) on the basis of a rotation body, which is produced by rotation of the inner contour line (25, 26) about the center line (27).

**14.** The method according to claim 13, comprising the additional steps:

- determining light points (15, 16, 17) projected onto an upper container edge (6); and
- determining the center line (27) of the container (5) on the basis of the light points (15, 16, 17).

**15.** The method according to any one of claims 13-14, which is carried out with the device (2) according to any one of claims 1-11 or the beverage dispenser according to claim 12.

**Revendications**

**1.** Dispositif (2) permettant de définir un volume d'un récipient (5), en particulier d'un récipient pour boisson, comprenant

- une surface de mise en place (4) horizontale permettant le positionnement du récipient (5),
- un dispositif de projection (10) conçu pour projeter deux lignes lumineuses (12, 13) sur la surface de mise en place (4) et sur le récipient (5) positionné dessus,
- une unité d'enregistrement d'image (20) orientée vers la surface de mise en place (4) selon un angle (β) par rapport au dispositif de projection (10) et conçue pour détecter le récipient (5) et les lignes lumineuses (12, 13) projetées par le dispositif de projection (10), et
- une unité d'évaluation (24) conçue pour déterminer au moins une ligne de contour intérieur (25, 26) du récipient (5) et une ligne médiane (27) du récipient (5) à l'aide des lignes lumineuses (12, 13) enregistrées et pour définir le volume du récipient (5) à l'aide d'un corps de rotation résultant de la rotation de la ligne de contour intérieur (25, 26) autour de la ligne médiane (27).

2. Dispositif (2) selon la revendication 1, dans lequel les lignes lumineuses (12, 13) sont orientées angulairement les unes par rapport aux autres, dans lequel les lignes lumineuses (12, 13) sont orientées de manière préférée selon un angle ($\alpha$) supérieur ou égal à 15° et/ou inférieur ou égal à 175° les unes par rapport aux autres, en particulier d'environ 90°, et/ou dans lequel les lignes lumineuses (12, 13) se croisent.

3. Dispositif (2) selon l'une quelconque des revendications précédentes, dans lequel l'unité d'évaluation (24) est conçue pour :

   - déterminer des points lumineux (15, 16, 17), générés sur un bord supérieur de récipient (6), des lignes lumineuses (12, 13), et
   - définir la ligne médiane (27) du récipient (5) à l'aide des points lumineux (15, 16, 17).

4. Dispositif (2) selon l'une quelconque des revendications précédentes, dans lequel l'unité d'évaluation (24) est conçue pour :

   - déterminer trois points lumineux (15, 16, 17) générés sur le bord supérieur de récipient (6) et formant un triangle, et
   - définir la ligne médiane (27) du récipient (5) par rapport au pourtour du triangle.

5. Dispositif (2) selon l'une quelconque des revendications précédentes, dans lequel l'angle ($\beta$) de l'unité d'enregistrement d'image (20) par rapport au dispositif de projection (10) est supérieur ou égal à 2° et/ou est inférieur ou égal à 30°, de manière préférée est inférieur ou égal à 10°.

6. Dispositif selon l'une quelconque des revendications précédentes, dans lequel un axe optique (11) du dispositif de projection (10) et un axe optique (21) de l'unité d'enregistrement d'image (20) sont décalés parallèlement.

7. Dispositif (2) selon l'une quelconque des revendications précédentes, dans lequel l'unité d'évaluation (24) est conçue pour déterminer deux lignes de contour intérieur (25, 26) du récipient (5) à l'aide des lignes lumineuses (12, 13) enregistrées et pour définir un corps de rotation pour chaque ligne de contour intérieur (25, 26), dans lequel le volume du récipient (5) est défini en faisant la moyenne des deux corps de rotation.

8. Dispositif (2) selon l'une quelconque des revendications précédentes, dans lequel l'unité d'évaluation est conçue pour déterminer les lignes de contour intérieur à l'aide d'au plus trois images enregistrées par l'unité d'enregistrement d'image, de manière préférée à l'aide d'au plus deux images enregistrées par l'unité d'enregistrement d'image, de manière particulièrement préférée à l'aide d'une seule image enregistrée par l'unité d'enregistrement d'image.

9. Dispositif (2) selon l'une quelconque des revendications précédentes, dans lequel le dispositif de projection (10) comprend au moins un laser à lignes et/ou un module laser à croix conçu(s) pour générer les lignes lumineuses (12, 13).

10. Dispositif (2) selon l'une quelconque des revendications précédentes, dans lequel la surface de mise en place (4) horizontale est conçue pour absorber la lumière projetée et/ou pour la réfléchir de manière diffuse.

11. Dispositif (2) selon l'une quelconque des revendications précédentes, dans lequel l'unité d'évaluation (24) est conçue pour définir une quantité de sortie et/ou une recette de préparation d'une boisson à remplir dans le récipient (5) à l'aide du volume défini du récipient (5).

12. Distributeur automatique de boissons (1), comprenant le dispositif (2) selon l'une quelconque des revendications précédentes.

13. Procédé permettant de définir un volume d'un récipient (5), en particulier d'un récipient pour boisson, comprenant les étapes consistant à :

    - projeter deux lignes lumineuses (12, 13) sur une surface de mise en place (4) horizontale et sur le récipient (5) positionné dessus ;
    - enregistrer une image du récipient (5) avec les lignes lumineuses (12, 13) projetées dessus et/ou enregistrer au plus trois images du récipient au sein desquelles les lignes lumineuses projetées sur le récipient sont détectées ;
    - déterminer au moins une ligne de contour intérieur (25, 26) du récipient (5) et une ligne médiane (27) du récipient (5) à l'aide des positions des lignes lumineuses (12, 13) sur le récipient (5) ; et
    - définir le volume du récipient (5) à l'aide d'un corps de rotation résultant de la rotation de la ligne de contour intérieure (25, 26) autour de la ligne médiane (27).

14. Procédé selon la revendication 13, comprenant les étapes supplémentaires consistant à :

    - déterminer des points lumineux (15, 16, 17) projetés sur un bord supérieur de récipient (6) ; et

- définir la ligne médiane (27) du récipient (5) à l'aide des points lumineux (15, 16, 17).

15. Procédé selon l'une quelconque des revendications 13 à 14, mis en oeuvre grâce au dispositif (2) selon l'une quelconque des revendications 1 à 11 ou au distributeur automatique de boissons selon la revendication 12.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014217840 B4
- US 20190062137 A1
- DE 102018113933 A1
- DE 102014017490 A1